# EUROPEAN PATENT APPLICATION

(11) **EP 3 901 806 A2**
(43) Date of publication of application: **27.10.2021**
(21) Application number: 21195856.6
(22) Date of filing: 09.09.2021
(51) Int. Cl.: G06F 21/57

(54) **TRUSTED ENVIRONMENT REMOTE VERIFICATION METHOD AND APPARATUS, DEVICE, SYSTEM, AND MEDIUM**

(30) Priority: 28.10.2020 CN 202011174379
(71) Applicant: BAIDU ONLINE NETWORK TECHNOLOGY (BEIJING) CO., LTD., Beijing 100085 (CN)
(72) Inventor: CAO, Jingqi, BEIJING, 100085 (CN); LI, Xiangmin, BEIJING, 100085 (CN); DING, Jiachen, BEIJING, 100085 (CN); WANG, Hongyan, BEIJING, 100085 (CN); JING, Bo, BEIJING, 100085 (CN)
(74) Representative: Regimbeau

(57) **Abstract**

Provided are a trusted environment remote verification method and apparatus, a device, a system, and a medium. The implementation is as follows: in response to a remote verification request of a verification demander, performing local verification on a target enclave through a verification program of the verifier; and signing a local verification result through a first key of the verification program, and feeding back the signed local verification result to the verification demander to enable the verification demander to perform the following operations: performing signature verification on the signed local verification result according to a second key associated with the first key, and determining a remote verification result of the target enclave according to a signature verification result.

## Description

### TECHNICAL FIELD

The present application relates to the field of computer technologies, in particular, to blockchain technologies, and can be applied to cloud computing or cloud services. Specifically, the present application relates to a trusted environment remote verification method and apparatus, a device, a system, and a medium.

### BACKGROUND

With the development and increasingly opening of the Internet technologies, data privacy has become increasingly important. In order to improve the security of the private data processing, the private data usually need to be processed strictly according to a predetermined processing logic and based on trusted computing, so that the private data itself and the computing logic cannot be illegally read and corrupted.

The current trusted computing technology is usually implemented based on Intel Software Guard Extensions (Intel SGX) technology. However, in the process of using Intel SGX technology, the authenticity of a trusted environment is usually required to be verified.

In the related art, when the trusted environment is remotely verified between the participant platforms of the trusted computing environment, the verification process will be affected by external factors, causing poor universality.

### SUMMARY

The present application provides a trusted environment remote verification method and apparatus, a device, a system, and a medium, which have better universality.

According to one aspect of the present application, a trusted environment remote verification method is provided. The method is performed by a verifier and includes the steps described below.

In response to a remote verification request of a verification demander, local verification is performed on a target enclave through a verification program of the verifier.

A local verification result is signed through a first key of the verification program, and the signed local verification result is fed back to the verification demander to enable the verification demander to perform the following operations: performing signature verification on the signed local verification result according to a second key associated with the first key, and determining a remote verification result of the target enclave according to a signature verification result.

According to another aspect of the present application, a trusted environment remote verification method is further provided. The method is performed by a verification demander and includes the steps described below.

A remote verification request is initiated, based on a target enclave of a verifier, to the verifier to enable the verifier to perform the following operations: performing local verification on the target enclave through a verification program of the verifier, and signing a local verification result through a first key of the verification program.

Signature verification is performed on the signed local verification result according to a second key associated with the first key, and a remote verification result of the target enclave is determined according to a signature verification result.

According to another aspect of the present application, a trusted environment remote verification apparatus is further provided. The apparatus is configured in a verifier and includes a local verification module and a feedback module.

The local verification module is configured to, in response to a remote verification request of a verification demander, perform local verification on a target enclave through a verification program of the verifier.

The feedback module is configured to sign a local verification result through a first key of the verification program, and feed back the signed local verification result to the verification demander to enable the verification demander to perform the following operations: performing signature verification on the signed local verification result according to a second key associated with the first key, and determining a remote verification result of the target enclave according to a signature verification result.

According to another aspect of the present application, a trusted environment remote verification apparatus is further provided. The apparatus is configured in a verification demander and includes a remote verification request sending module and a remote verification result determination module.

The remote verification request sending module is configured to initiate, based on a target enclave of a verifier, a remote verification request to the verifier to enable the verifier to perform the following operations: performing local verification on the target enclave through a verification program of the verifier, and signing a local verification result through a first key of the verification program.

The remote verification result determination module is configured to perform signature verification on the signed local verification result according to a second key associated with the first key, and determine a remote verification result of the target enclave according to a signature verification result.

According to another aspect of the present application, an electronic device is further provided. The electronic device includes at least one processor, and a memory communicatively connected to the at least one processor.

The memory has instructions executable by the at least one processor stored thereon, where the instructions are executed by the at least one processor to enable the at least one processor to perform any one of the trusted environment remote verification methods provided in embodiments of the present application.

According to another aspect of the present application, a trusted environment remote verification system is further provided. The system includes a verifier and a verification demander.

The verification demander initiates a remote verification request to the verifier based on a target enclave of the verifier.

The verifier performs location verification on the target enclave through a verification program and signs a local verification result through a first key of the verification program.

The verification demander performs signature verification on the signed local verification result according to a second key associated with the first key and determines a remote verification result of the target enclave according to a signature verification result.

According to another aspect of the present application, a non-transitory computer-readable storage medium is further provided. The non-transitory computer-readable storage medium has computer instructions stored thereon, where the computer instructions are configured to cause a computer to perform any one of the trusted environment remote verification methods provided in embodiments of the present application.

According to the technologies of the present application, a novel trusted environment remote verification method is provided, which improves the remote verification universality.

It is to be understood that the content described in this part is neither intended to identify key or important features of embodiments of the present disclosure nor intended to limit the scope of the present disclosure. Other features of the present disclosure are easy to understand from the description provided hereinafter.

### BRIEF DESCRIPTION OF DRAWINGS

The drawings are intended to provide a better understanding of the present scheme and not to limit the present application. In the drawings:
FIG. 1A is a schematic diagram of a process of trusted environment remote verification in the related art;
FIG. 1B is a flowchart of a trusted environment remote verification method according to an embodiment of the present application;
FIG. 2 is a flowchart of another trusted environment remote verification method according to an embodiment of the present application;
FIG. 3 is a flowchart of another trusted environment remote verification method according to an embodiment of the present application;
FIG. 4A is a flowchart of another trusted environment remote verification method according to an embodiment of the present application;
FIG. 4B is a flowchart of another trusted environment remote verification method according to an embodiment of the present application;
FIG. 5 is a structural diagram of a trusted environment remote verification apparatus according to an embodiment of the present application;
FIG. 6 is a structural diagram of another trusted environment remote verification apparatus according to an embodiment of the present application; and
FIG. 7 is a block diagram of an electronic device for implementing a trusted environment remote verification method in an embodiment of the present application.

### DETAILED DESCRIPTION

Exemplary embodiments of the present application, including details of embodiments of the present application, are described hereinafter in conjunction with the drawings to facilitate understanding. The exemplary embodiments are merely illustrative. Therefore, it will be realized by those having ordinary skill in the art that various changes and modifications may be made to the embodiments described herein without departing from the scope and spirit of the present application. Similarly, description of well-known functions and constructions is omitted hereinafter for clarity and conciseness.

Trusted computing is a technology that can be promoted and developed by trusted computing groups (trusted computing clusters). The trusted computing is that a trusted computing platform supported by hardware security modules is widely used in computing and communication systems, to improve the overall security of the system. Based on the trusted computing, the computation can be carried out strictly according to a predetermined processing logic so that the protected private data and computation logic cannot be illegally read and destroyed by anyone, thereby achieving the fusion computation of data on the premise of protecting the privacy of data.

The mature one of the current trusted computing technologies is the trusted computing implemented based on central processing unit (CPU) hardware. In the field of cloud services or cloud computing, the typical one is that general trusted computing is achieved by using Intel SGX technology (hereinafter referred to as SGX technology).

In the SGX technology, a trusted environment, called enclave, is constructed by specific instructions of a central processing unit (CPU). In such a trusted environment, programs and data are present in encrypted form, which can ensure that programs are strictly executed according to a desired logic and that any plaintext information of data in a memory cannot be acquired. The trusted environment needs to be verified to judge the authenticity of the trusted environment. There are two forms of verification: local verification and remote verification.

The local verification is used for different enclaves to verify each other's trusted environment on the same participant platform (the same CPU) in the trusted computing platform. This manner is used for verifying whether a target enclave is really an enclave running under the same CPU by calling relevant CPU instructions of SGX.

The remote verification is used for a program of one participant platform among different participant platforms of the trusted computing platform to verify the authenticity of the trusted environment of a target enclave on another participant platform.

Since the remote verification of the trusted environment is the key technology for establishing a trusted computing platform, the present application improves the remote verification of the trusted environment on the basis of the related art.

In order to clearly describe the technical scheme of the present application, the remote verification method of the trusted environment in the related art is illustrated by way of example.

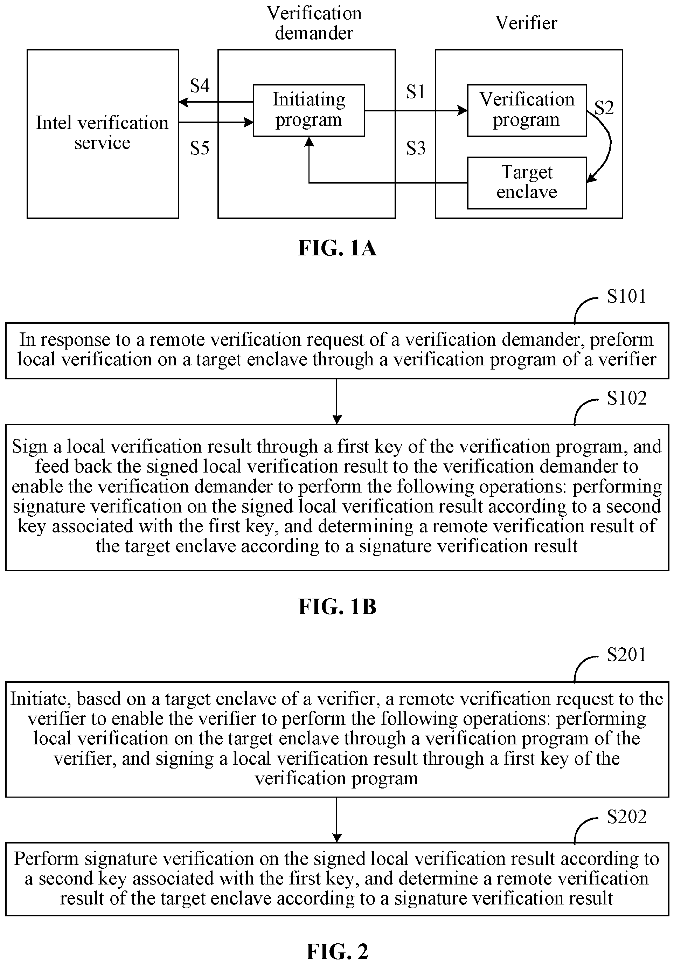

With reference to FIG. 1A which shows a schematic diagram of a process of trusted environment remote verification in the related art, the trusted computing platform includes a verification demander, a verifier, and an Intel verification service. The specific remote verification process is described below.

In step S1, an initiating program (which may be an enclave program or a non-enclave program) of the verification demander initiates a remote verification request for a target enclave in the verifier.

In step S2, a verification program in the verifier verifies, according to to-be-verified information of the target enclave, the authenticity of the to-be-verified information, and generates a verification report; and acquires a private key corresponding to the verification program from a CPU by calling an Intel software development kit (SDK) and signs the verification result through the private key.

In step S3, the signed verification result is fed back to the initiating program.

In step S4, the initiating program sends the signed verification result to the Intel verification service for signature verification.

In step S5, the Intel verification service feeds back the signature verification result to the initiating program; if the signature verification succeeds, approves the verification result; otherwise, does not approve the verification result.

Since the Intel SDK is required to be called in the preceding operations and meanwhile the determination of the verification result depends on the Intel verification service, the technical scheme in the related art needs to be implemented on the premise of trusting Intel. With the privatization environment in which no external network accesses and the unpredictable transnational network environment in the future, the preceding remote verification manner is always restricted by the external environment and has poor universality.

In order to improve the universality of trusted environment remote verification, the present application provides a novel trusted environment remote verification method. The method is suitable for the case of performing remote verification on a trusted environment of a target enclave between different participants in a trusted computing platform. The trusted environment remote verification method provided in the embodiment of the present application may be executed by a trusted environment remote verification apparatus. The apparatus may be implemented by software and/or hardware and is specifically configured in an electronic device. The electronic device may be a computing device carrying a blockchain node.

FIG. 1B is a flowchart of a trusted environment remote verification method according to an embodiment of the present application. The method is performed by a verifier and includes the steps described below.

In step S101, in response to a remote verification request of a verification demander, local verification is performed on a target enclave through a verification program of the verifier.

The verification demander may be understood as, among participants included in the trusted computing platform, a participant who has demands to verify the authenticity of the trusted environment of the target enclave of another participant. The verifier may be understood as a participant to which a verified target enclave belongs. The target enclave is a to-be-verified enclave in the verifier.

The verification program may be understood as a program configured to verify the authenticity of the target enclave in the verifier. It is to be noted that since the verification program of the verifier needs to perform the local verification on the target enclave in the verifier, it is necessary to acquire to-be-verified information from trusted hardware of the verifier and verify the real existence of the target enclave based on the acquired to-be-verified information. Therefore, the verification program needs to have a trusted hardware access function. Since the verifier may include both an enclave program running in a trusted environment and a non-enclave program running in a non-trusted environment but only the enclave program has the trusted hardware access function, the verification program here needs to be the enclave program.

It is to be noted that since the enclave program in the verifier may correspond to a conventional service program, the enclave program may be used for implementing the corresponding service functions by running in the trusted environment. In order to facilitate program management and avoid the influence of program obfuscation on users, the verification program usually only has a local verification function but does not have any actual service function.

It is to be understood that since the verification program is essentially an enclave program, the execution logic of the verification program and data in the execution process cannot be read or destroyed, making the local verification result safe and reliable.

In an optional embodiment, when the verification demander has a remote verification demand to verify the authenticity of the target enclave of the verifier, the verification demander initiates a remote verification request to the verifier; and the verifier responds to the remote verification request through the local verification program and performs local verification on the target enclave.

For example, the verification demander may initiate a remote verification request to the verifier through an initiating program, and a receiving program of the verifier receives the remote verification request and informs the verifier to respond to the remote verification request.

The initiating program may be a main program in the verification demander, a service program used for implementing service functions, or an application program which is different from the service program and specially used for performing remote verification request generation and initiation functions. The initiating program may be an enclave program or a non-enclave program in the verification demander, which is not limited in the embodiments of the present application.

It is to be noted that the remote verification request needs to include a verifier identifier and a target enclave identifier, so as to achieve the positioning of the target enclave and avoid verification errors or missed verification. In addition, the embodiments of the present application do not limit the generation mode, format requirements and sending mode of the remote verification request.

The receiving program may be a main program in the verifier, a service program used for implementing service functions, an application program which is different from the service program and specially used for performing the remote verification request receiving function, or the verifier itself.

In step S102, a local verification result is signed through a first key of the verification program, and the signed local verification result is fed back to the verification demander to enable the verification demander to perform the following operations: performing signature verification on the signed local verification result according to a second key associated with the first key, and determining a remote verification result of the target enclave according to a signature verification result.

The first key of the verification program and the second key associated with the first key may be a private key and a public key in a public-private key pair, respectively. In order to ensure the data consistency of the same trusted computing platform, the verification programs in the same trusted computing platform may be the same, and accordingly, the first key and the second key in each participant are also correspondingly the same. In order to avoid the occurrence of verification confusion among participants of different trusted computing platforms, verification programs in different trusted computing platforms are usually configured to be different, and accordingly, the first key and the second key in each of participants in different trusted computing platforms are also correspondingly different.

Optionally, the first key may be acquired from the local CPU or other storage areas through the verification program, and the local verification result may be signed according to the acquired first key and fed back to the verification demander. It is to be noted that the embodiments of the present application do not limit the specific storage position and acquisition manner of the first key.

However, if the first key is stored in the local CPU or other storage areas, there will be certain security risks, and in addition, the operation of acquiring the first key needs to be performed, which brings data delay to the signature process of the local verification result. In order to avoid the above case, the first key may also be hard coded into the verification program, and accordingly, the second key is associated with the verification program in the form of plaintext, which facilitates the acquisition or use of the second key when the verifier serves as the verification demander.

The hard coding is a software development practice that embeds data directly into a source code of programs or other executable objects, which is different from the manner of acquiring data from the external or generating data at runtime. The hard-coded data may usually only be modified by editing the source code and recompiling the executable file. Therefore, the operation of hard-coding the first key into the verification program can avoid the compromise of the first key.

In view of the privacy of the first key, in order to prevent the first key carried by a single participant in a trusted computing platform from being unwrapped in a brute-force manner and thus affecting the security of remote verification of other participants in the trusted computing platform, the verification program may also be one of program copies of a base program, and first keys in different program copies are different. Typically, different participants in the same trusted computing platform use different program copies, thereby avoiding the overall compromise of first keys in the trusted computing platform and ensuring the security of remote verification.

That is, when the base program is compiled, different first keys are generated respectively, and each of the first keys is hard-coded into the base program to obtain a corresponding program copy; and one of the program copies is selected as the verification program.

In an optional embodiment, the first key and the second key may be generated by at least one participant in the trusted computing platform when the verification program is compiled. However, if participants participate in the key generation, there may be key compromise, which will affect the accuracy of remote verification results of enclave authenticity in the whole trusted computing platform.

In order to solve the problem of the security of the verification program itself and thus ensure the accuracy of remote verification results of enclave authenticity in the whole trusted computing platform, in another optional embodiment, the first key and the second key may be generated by a public supervisor of the verification demander and the verifier when the verification program is compiled so that platform participants such as the verification demander and the verifier are stripped from the key generation process, thereby avoiding the compromise of the first key and laying a foundation for the accuracy of the remote verification results of enclave authenticity in the trusted computing platform.

The public supervisor may be understood as a computing device set up by an institution that has supervision or management authority over both the verification demander and the verifier, or a computing device set up by an institution whose authority or credibility is recognized by both the verification demander and the verifier. Optionally, the public supervisor may be at least one participant in the trusted computing platform. Alternatively, optionally, the public supervisor is an independent platform party other than the trusted computing platform.

In a specific implementation, the verification demander and the verifier may be different branches under the head office of a bank, and accordingly, the public supervisor is the head office of the bank. In another specific implementation, the public supervisor may also be a government agency.

It is to be noted that one trusted computing platform may correspond to at least one public supervisor. In order to avoid the occurrence of confusion in the remote verification process caused by too many public supervisors, one trusted computing platform is typically equipped with a public supervisor.

In order to ensure that the storage logic of the verification program cannot be read by reverse engineering in a brute-force manner, further, when the first key is hard-coded in the verification program, to avoid the compromise of the first key, in an optional embodiment, code obfuscation is performed on the verification program when the verification program is written and/or compiled.

The obfuscated code, also known as junk code, is an act that converts the code of a computer program into a form that is functionally equivalent but difficult to read and understand.

For example, the verifier signs a local verification result through a first key of a verification program and feeds back the signed local verification result to the verification demander. The verification demander performs signature verification on the signed local verification result according to a second key associated with the first key; if the signature verification succeeds, accepts the local verification result, determines that the remote verification succeeds, and determines the remote verification result of a target enclave according to the local verification result; and if the signature verification fails, rejects the local verification result, and determines that the remote verification fails.

In the embodiments of the present application, the local verification result of the target enclave is signed through the first key of the verification program of the verifier, and the verification demander performs signature verification on the signed local verification result according to the second key and determines the remote verification result of the target enclave according to the signature verification result, so that in the remote verification process of the trusted computing platform, the remote verification of the trusted environment across participants in the trusted computing platform can be independently achieved without relying on specific remote verification services, and the universality is better.

On the basis of the preceding technical schemes, further, with reference to FIG. 2, the embodiments of the present application further provide a flowchart of another trusted environment remote verification method. The method is performed by a verification demander and includes the steps described below.

In step S201, a remote verification request is initiated based on a target enclave of a verifier to the verifier to enable the verifier to perform the following operations: performing local verification on the target enclave through a verification program of the verifier, and signing a local verification result through a first key of the verification program.

The verification demander may be understood as, among participants included in the trusted computing platform, a participant who has demands to verify the authenticity of the trusted environment of the target enclave of another participant. The verifier may be understood as a participant to which a verified target enclave belongs. The target enclave is a to-be-verified enclave in the verifier.

The verification program may be understood as a program used for verifying the authenticity of the target enclave in the verifier. It is to be noted that since the verification program of the verifier needs to perform the local verification on the target enclave in the verifier, it is necessary to acquire to-be-verified information from trusted hardware of the verifier and verify the real existence of the target enclave based on the acquired to-be-verified information. Therefore, the verification program needs to have a trusted hardware access function. Since the verifier may include both an enclave program running in a trusted environment and a non-enclave program running in a non-trusted environment but only the enclave program has the trusted hardware access function, the verification program here needs to be the enclave program.

It is to be noted that since the enclave program in the verifier may correspond to a conventional service program, the enclave program may be used for implementing the corresponding service functions by running in the trusted environment. In order to facilitate program management and avoid the influence of program obfuscation on users, the verification program usually only has a local verification function but does not have any actual service function.

It is to be understood that since the verification program is essentially an enclave program, the execution logic of the verification program and data in the execution process cannot be read or destroyed, making the local verification result safe and reliable.

In an optional embodiment, when the verification demander has a remote verification demand to verify the authenticity of the target enclave of the verifier, the verification demander initiates a remote verification request to the verifier; the verifier responds to the remote verification request through a local verification program and performs local verification on the target enclave; and the verifier signs a local verification result through a first key of the verification program and feeds back the signed local verification result to the verification demander so that the verification demander performs the subsequent verification processing.

For example, the verification demander may initiate a remote verification request to the verifier through an initiating program, and a receiving program of the verifier receives the remote verification request and informs the verifier to respond to the remote verification request.

The initiating program may be a main program in the verification demander, a service program used for implementing service functions, or an application program which is different from the service program and specially used for performing remote verification request generation and initiation functions. The initiating program may be an enclave program or a non-enclave program in the verification demander, which is not limited in the embodiments of the present application.

It is to be noted that the remote verification request needs to include a verifier identifier and a target enclave identifier, so as to achieve the positioning of the target enclave and avoid verification errors or missed verification. In addition, the embodiments of the present application do not limit the generation mode, format requirements and sending mode of the remote verification request.

The receiving program may be a main program in the verifier, a service program used for implementing service functions, an application program which is different from the service program and specially used for performing the remote verification request receiving function, or the verifier itself.

The first key of the verification program may be a private key in a public-private key pair of the verification program and used for signing the local verification result. The second key associated with the first key involved later may be a public key in the public-private key pair of the verification program and used for performing signature verification on the signed local verification result.

In order to ensure the data consistency of the same trusted computing platform, the verification programs in the same trusted computing platform may be the same, and accordingly, the first key and the second key in each participant are also correspondingly the same. In order to avoid the occurrence of verification confusion among participants of different trusted computing platforms, verification programs in different trusted computing platforms are usually configured to be different, and accordingly, the first key and the second key in each of participants in different trusted computing platforms are also correspondingly different.

The first key may be in the local CPU or other storage areas of the verifier, and accordingly, the verification program of the verifier acquires the first key from the local CPU, signs the local key according to the first key, and feeds back the signed local key to the verification demander. It is to be noted that the embodiments of the present application do not limit the specific storage position and acquisition manner of the first key.

However, if the first key is stored in the local CPU or other storage areas, there will be certain security risks, and in addition, the operation of acquiring the first key needs to be performed, which brings data delay to the signature process of the local verification result. In order to avoid the above case, the first key may also be hard coded into the verification program, and accordingly, the second key is associated with the verification program in the form of plaintext, which facilitates the acquisition or use of the second key when the verifier serves as the verification demander.

The hard coding is a software development practice that embeds data directly into a source code of programs or other executable objects, which is different from the manner of acquiring data from the external or generating data at runtime. The hard-coded data may usually only be modified by editing the source code and recompiling the executable file. Therefore, the operation of hard-coding the first key into the verification program can avoid the compromise of the first key.

In view of the privacy of the first key, in order to prevent the first key carried by a single participant in a trusted computing platform from being unwrapped in a brute-force manner and thus affecting the security of remote verification of other participants in the trusted computing platform, the verification program may also be one of program copies of a base program, and first keys in different program copies are different. Typically, different participants in the same trusted computing platform use different program copies, thereby avoiding the overall compromise of first keys in the trusted computing platform and ensuring the security of remote verification.

That is, when the base program is compiled, different first keys are generated respectively, and each of the first keys is hard-coded into the base program to obtain a corresponding program copy; and one of the program copies is selected as the verification program.

In an optional embodiment, the first key and the second key may be generated by at least one participant in the trusted computing platform when the verification program is compiled. However, if participants participate in the key generation, there may be key compromise, which will affect the accuracy of remote verification results of enclave authenticity in the whole trusted computing platform.

In order to solve the problem of the security of the verification program itself and thus ensure the accuracy of remote verification results of enclave authenticity in the whole trusted computing platform, in another optional embodiment, the first key and the second key may be generated by a public supervisor of the verification demander and the verifier when the verification program is compiled so that platform participants such as the verification demander and the verifier are stripped from the key generation process, thereby avoiding the compromise of the first key and laying a foundation for the accuracy of the remote verification results of enclave authenticity in the trusted computing platform.

In order to ensure that the storage logic of the verification program cannot be read by reverse engineering in a brute-force manner, further, when the first key is hard-coded in the verification program, to avoid the compromise of the first key, in an optional embodiment, code obfuscation is performed on the verification program when the verification program is written and/or compiled.

The obfuscated code, also known as junk code, is an act that converts the code of a computer program into a form that is functionally equivalent but difficult to read and understand.

The public supervisor may be understood as a computing device set up by an institution that has supervision or management authority over both the verification demander and the verifier, or a computing device set up by an institution whose authority or credibility is recognized by both the verification demander and the verifier. Optionally, the public supervisor may be at least one participant in the trusted computing platform. Alternatively, optionally, the public supervisor is an independent platform party other than the trusted computing platform.

In a specific implementation, the verification demander and the verifier may be different branches under the head office of a bank, and accordingly, the public supervisor is the head office of the bank. In another specific implementation, the public supervisor may also be a government agency.

It is to be noted that one trusted computing platform may correspond to at least one public supervisor. In order to avoid the occurrence of confusion in the remote verification process caused by too many public supervisors, one trusted computing platform is typically equipped with a public supervisor.

In step S202, signature verification is performed on the signed local verification result according to a second key associated with the first key, and a remote verification result of the target enclave is determined according to a signature verification result.

The verification demander receives the signed local verification result fed back by the verifier and performs signature verification on the signed local verification result according to the second key associated with the first key; if the signature verification succeeds, accepts the local verification result, determines that the remote verification succeeds, and determines the remote verification result of the target enclave according to the local verification result; and if the signature verification fails, rejects the local verification result, and determines that the remote verification fails.

Specifically, the step in which the remote verification result of the target enclave is determined according to the local verification result may be as follows: if the local verification result itself is that the target enclave is a real trusted environment, the remote verification result of the target enclave is determined to be verified successfully; and if the local verification result itself is that the target enclave is not a real trusted environment, the verification of the remote verification result of the target enclave is determined to be failed.

It is to be noted that when the verification program copies adopted by at least two participants in the same trusted computing platform are different, second keys corresponding to at least two program copies may be stored in the verification demander. Accordingly, the verification demander performs the signature verification operation on the signed local verification result in a manner of traversing and using each of the second keys.

Optionally, in order to improve the signature verification efficiency and further improve the remote verification efficiency, the verification demander may also acquire a second key corresponding to the verification program adopted by the verifier according to a key identifier and perform the signature verification operation according to the acquired second key.

In the embodiments of the present application, the local verification result of the target enclave is signed through the first key of the verification program of the verifier, and the verification demander performs signature verification on the signed local verification result according to the second key and determines the remote verification result of the target enclave according to the signature verification result, so that in the remote verification process of the trusted computing platform, the remote verification of the trusted environment across participants in the trusted computing platform can be independently achieved without relying on specific remote verification services, and the universality is better.

In order to reduce the risk caused by improper management of the second key by the verification demander and reduce the complexity of the verification demander, on the basis of the preceding technical schemes, in an optional embodiment, part of verification operations in the verification demander may also be migrated to a public supervisor of the verification demander and the verifier for implementation.

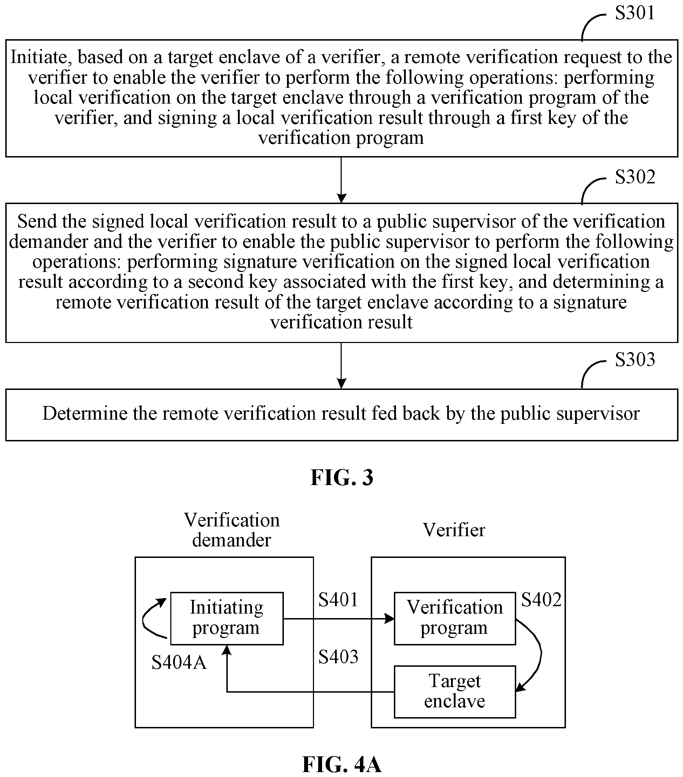

With reference to FIG. 3 which shows another trusted environment remote verification method. The method is performed by a verification demander and includes the steps described below.

In step S301, a remote verification request is initiated based on a target enclave of a verifier to the verifier to enable the verifier to perform the following operations: performing local verification on the target enclave through a verification program of the verifier, and signing a local verification result through a first key of the verification program.

In step S302, the signed local verification result is sent to a public supervisor of the verification demander and the verifier to enable the public supervisor to perform the following operations: performing signature verification on the signed local verification result according to a second key associated with the first key, and determining a remote verification result of the target enclave according to a signature verification result.

The public supervisor may be understood as a computing device set up by an institution that has supervision or management authority over both the verification demander and the verifier, or a computing device set up by an institution whose authority or credibility is recognized by both the verification demander and the verifier. Optionally, the public supervisor may be at least one participant in the trusted computing platform. Alternatively, optionally, the public supervisor is an independent platform party other than the trusted computing platform.

In a specific implementation, the verification demander and the verifier may be different branches under the head office of a bank, and accordingly, the public supervisor is the head office of the bank. In another specific implementation, the public supervisor may also be a government agency.

It is to be noted that one trusted computing platform may correspond to at least one public supervisor. In order to avoid the occurrence of confusion in the remote verification process caused by too many public supervisors, one trusted computing platform is typically equipped with a public supervisor.

For example, the verification demander acquires the signed local verification result and directly sends the signed local verification result to the public supervisor of the verification demander and the verifier. The public supervisor performs signature verification on the signed local verification result according to a locally stored second key associated with the first key; if the signature verification succeeds, accepts the local verification result, and generates the final remote verification result including the local verification result; if the signature verification fails, rejects the local verification result, and generates the final remote verification result including the verification failure result; and feeds back the final remote verification result to the verification demander.

In step S303, the remote verification result fed back by the public supervisor is determined.

For example, the verification demander acquires the final remote verification result and determines the real existence of the target enclave according to the final remote verification result.

In order to ensure the validity of the final remote verification result, when the public supervisor generates the final remote verification result, the public supervisor may also sign the final remote verification result according to its own private key and feeds back the signed final remote verification result to the verification demander. Accordingly, the verification demander performs signature verification on the final remote verification result fed back by the public supervisor through a locally stored public key of the public supervisor, and determines the real existence of the target enclave according to the situation of the signature verification.

In order to improve the operation convenience of the verification demander and reduce the local operation risk of the verification demander, a key of the public supervisor, that is, a public key of the public supervisor, may also be hard coded into a local program. The local program may be an initiating program in the verification demander. Accordingly, the verification demander performs signature verification on the final remote verification result fed back by the public supervisor based on the locally hard-coded key of the public supervisor, and determines the real existence of the target enclave according to the situation of the signature verification.

Specifically, the step in which the real existence of the target enclave is determined according to the situation of the signature verification may be as follows: if the signature verification succeeds, the remote verification is determined to be successful, and the final remote verification result is approved; and if the signature verification fails, the remote verification is directly determined to be failed.

It is to be noted that when a verification demander in a trusted computing platform needs to verify at least two target enclaves that may come from the same verifier or different verifiers, or when at least two verification demanders in the trusted computing platform need to remotely verify at least one target enclave that is the same or different, according to the embodiments of the present application, the actual verification operation performed on the remote verification result is migrated to the public supervisor, and the public supervisor performs unified processing and feeds back remote verification results together, thereby reducing the risk caused by improper management of the second key by each verification demander and reducing the complexity of each verification demander.

On the basis of the preceding technical schemes, the present application further provides a preferred embodiment of the trusted environment remote verification method.

With reference to FIG. 4A which shows a flowchart of a trusted environment remote verification method, the method includes the steps described below.

In step S401, when an initiating program of a verification demander needs to verify the real existence of a target enclave of a verifier, the initiating program of the verification demander initiates a remote verification request to a verification program of the verifier.

In step S402, the verification program acquires to-be-verified information of the target enclave from trusted hardware and performs local verification on the target enclave according to the to-be-verified information to obtain a local verification result.

In step S403, the verification program signs the local verification result through its own hard-coded private key and feeds back the signed local verification result to the verification demander.

In step S404A, the verification demander locally acquires a public key of the verification program and performs signature verification on the signed local verification result; if the signature verification succeeds, determines that the remote verification succeeds, and uses the local verification result after the signature verification as the remote verification result of the target enclave; and if the signature verification fails, rejects the local verification result and determines that the verification fails.

The verification program is an enclave program and is used for locally verifying each target enclave in the verifier. Since the enclave program is executed in the trusted environment, the execution logic of the verification program and the data in the execution process cannot be read or destroyed, thereby improving the verification security.

Optionally, the verification program may be one of multiple program copies, and each of the program copies is compiled separately with different random parameters, thereby reducing the influence range of a single program copy after being unwrapped in a brute-force manner. Each of the program copies contains an independent public-private key pair for signature.

Optionally, in order to improve the convenience of the verification process and the storage security of the private key, the private key may also be hard-coded into the verification program, thereby ensuring that there is no way to acquire the private key after the program is compiled. The public key is public, which is easily read from the verification program at any time, and is used for signature verification.

In order to ensure that the storage logic of the private key in the program cannot be read by reverse engineering in a brute-force manner, code obfuscation is performed on the verification program when the code is written and/or compiled.

In order to solve the security problem of the verification program itself and avoid the compromise of the private key, an operator which compiles the verification program may be the public supervisor of the verifier and the verification demander.

On the basis of the preceding technical schemes, in another optional embodiment, step S404A may also be migrated to the public supervisor for execution to reduce the risk caused by improper key management by the verification demander and reduce the complexity of the verification demander.

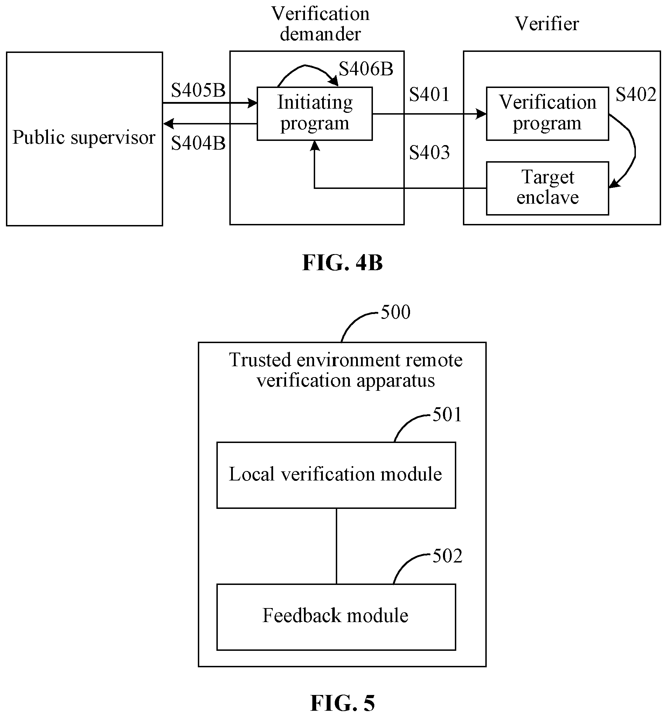

Further, with reference to FIG. 4B which shows a flowchart of a trusted environment remote verification method, step S404A is replaced by steps S404B to S406B.

In step S404B, the verification demander sends the signed local verification result to the public supervisor.

In step S405B, the public supervisor locally acquires a public key of the verification program and performs signature verification on the signed local verification result; if the signature verification succeeds, determines that the remote verification succeeds, and uses the local verification result after the signature verification as the remote verification result of the target enclave; and if the signature verification fails, rejects the local verification result and determines that the verification fails. The remote verification result is signed through a private key of the public supervisor and fed back to the initiating program of the verification demander.

In step S406B, the initiating program of the verification demander performs signature verification on the remote verification result fed back by the public supervisor based on the locally hard-coded public key of the public supervisor; if the signature verification succeeds, determines that the remote verification succeeds and accepts the remote verification result; and if the signature verification fails, determines that the remote verification fails.

As the implementation of the preceding trusted environment remote verification methods, the present application further provides an embodiment of a virtual apparatus for implementing the trusted environment remote verification method. Further, with reference to FIG. 5 which shows a structural diagram of a trusted environment remote verification apparatus, the trusted environment remote verification apparatus 500 is configured in a verifier and includes a local verification module 501 and a feedback module 502.

The local verification module 501 is configured to, in response to a remote verification request of a verification demander, perform local verification on a target enclave through a verification program of the verifier.

The feedback module 502 is configured to sign a local verification result through a first key of the verification program, and feed back the signed local verification result to the verification demander to enable the verification demander to perform the following operations: performing signature verification on the signed local verification result according to a second key associated with the first key, and determining a remote verification result of the target enclave according to a signature verification result.

In the embodiments of the present application, the local verification result of the target enclave is signed through the first key of the verification program of the verifier, and the verification demander performs signature verification on the signed local verification result according to the second key and determines the remote verification result of the target enclave according to the signature verification result, so that in the remote verification process of the trusted computing platform, the remote verification of the trusted environment across participants in the trusted computing platform can be independently achieved without relying on specific remote verification services, and the universality is better.

Further, the first key is hard coded into the verification program.

Further, the verification program is one of program copies of a base program, and first keys in different program copies are different.

Further, the first key and the second key are generated by a public supervisor of the verification demander and the verifier when the public supervisor compiles the verification program.

Further, code obfuscation is performed on the verification program when the verification program is written and/or compiled.

The preceding trusted environment remote verification apparatus may perform the trusted environment remote verification method provided in any of the embodiments of the present disclosure and has function modules and beneficial effects corresponding to the execution of the trusted environment remote verification method.

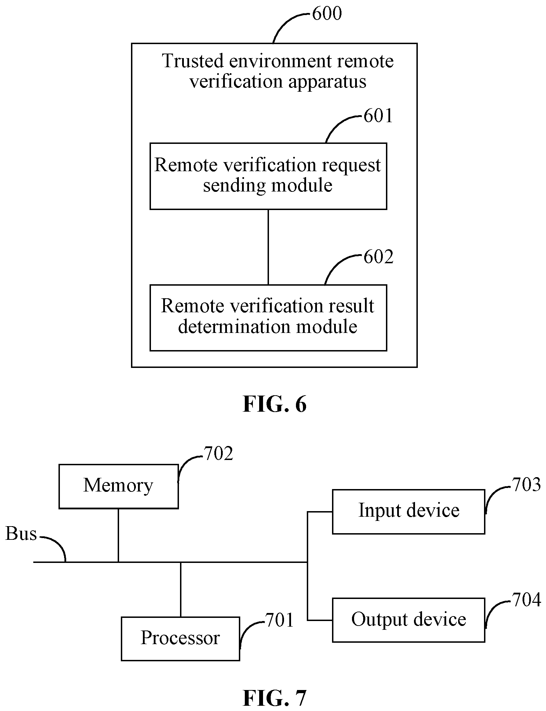

As the implementation of the preceding trusted environment remote verification methods, the present application further provides another embodiment of a virtual apparatus for implementing the trusted environment remote verification method. Further, with reference to FIG. 6 which shows a structural diagram of a trusted environment remote verification apparatus, the trusted environment remote verification apparatus 600 is configured in a verification demander and includes a remote verification request sending module 601 and a remote verification result determination module 602.

The remote verification request sending module 601 is configured to initiate, based on a target enclave of a verifier, a remote verification request to the verifier to enable the verifier to perform the following operations: performing local verification on the target enclave through a verification program of the verifier, and signing a local verification result through a first key of the verification program.

The remote verification result determination module 602 is configured to perform signature verification on the signed local verification result according to a second key associated with the first key, and determine a remote verification result of the target enclave according to a signature verification result.

In the embodiments of the present application, the local verification result of the target enclave is signed through the first key of the verification program of the verifier, and the verification demander performs signature verification on the signed local verification result according to the second key and determines the remote verification result of the target enclave according to the signature verification result, so that in the remote verification process of the trusted computing platform, the remote verification of the trusted environment across participants in the trusted computing platform can be independently achieved without relying on specific remote verification services, and the universality is better.

Further, the first key is hard coded into the verification program.

Further, the verification program is one of program copies of a base program, and first keys in different program copies are different.

Further, the first key and the second key are generated by a public supervisor of the verification demander and the verifier when the public supervisor compiles the verification program.

Further, code obfuscation is performed on the verification program when the verification program is written and/or compiled.

Further, the remote verification result determination module 602 includes a signed result sending unit and a remote verification result determination unit.

The signed result sending unit is configured to send the signed local verification result to the public supervisor of the verification demander and the verifier to enable the public supervisor to perform the following operations: performing the signature verification on the signed local verification result according to the second key associated with the first key, and determining the remote verification result of the target enclave according to the signature verification result.

The remote verification result determination unit is configured to determine the remote verification result fed back by the public supervisor.

Further, if the remote verification result of the target enclave includes signature information of the public supervisor, the remote verification result determination unit includes a remote verification result signature verification sub-unit.

The remote verification result signature verification sub-unit is configured to perform the signature verification on the remote verification result based on a locally hard-coded key of the public supervisor.

The preceding trusted environment remote verification apparatus may perform the trusted environment remote verification method provided in any of the embodiments of the present disclosure and has function modules and beneficial effects corresponding to the execution of the trusted environment remote verification method.

According to the embodiments of the present application, the present application further provides an electronic device and a readable storage medium.

FIG. 7 is a block diagram of an electronic device for implementing a trusted environment remote verification method in an embodiment of the present application. The electronic device is intended to represent various forms of digital computer, for example, a laptop computer, a desktop computer, a worktable, a personal digital assistant, a server, a blade server, a mainframe computer or another applicable computer. The electronic device may also represent various forms of mobile device, for example, a personal digital assistant, a cellphone, a smartphone, a wearable device or another similar computing device. Herein the shown components, the connections and relationships between these components, and the functions of these components are illustrative only and are not intended to limit the implementation of the present application as described and/or claimed herein. The electronic device may be a computing device carrying a blockchain node.

As shown in FIG. 7, the electronic device includes one or more processors 701, a memory 702, and interfaces for connecting various components, including a high-speed interface and a low-speed interface. The various components are interconnected to each other by different buses and may be mounted on a common mainboard or in other manners as desired. The processor may process instructions executed in the electronic device, including instructions stored in or on the memory to make graphic information of a graphical user interface (GUI) displayed on an external input/output device (for example, a display device coupled to an interface). In other implementations, if required, multiple processors and/or multiple buses may be used with multiple memories. Similarly, multiple electronic devices may be connected, each providing some necessary operations (for example, serving as a server array, a set of blade servers or a multiprocessor system). FIG. 7 shows one processor 701 by way of example.

The memory 702 is the non-transitory computer-readable storage medium provided in the present application. The memory has instructions executable by at least one processor stored thereon to cause the at least one processor to perform the trusted environment remote verification method provided in the present application. The non-transitory computer-readable storage medium of the present application has computer instructions stored thereon for causing a computer to perform the trusted environment remote verification method provided in the present application.

The memory 702 as a non-transitory computer-readable storage medium is configured to store a non-transitory software program, a non-transitory computer-executable program, and modules, for example, program instructions/modules (for example, the local verification module 501 and the feedback module 502 shown in FIG. 5; and/or the remote verification request sending module 601 and the remote verification result determination module 602 shown in FIG. 6) corresponding to the trusted environment remote verification method provided in the embodiments of the present application. The processor 701 executes non-transitory software programs, instructions and modules stored in the memory 702 to execute the various function applications and data processing of a server, that is, implement the trusted environment remote verification method provided in the preceding method embodiments.

The memory 702 may include a program storage region and a data storage region. The program storage region may store an operating system and an application program required by at least one function. The data storage region may store data created based on the use of the electronic device for performing the trusted environment remote verification method. Additionally, the memory 702 may include a high-speed random-access memory and a non-transient memory, for example, at least one disk memory, a flash memory or another non-transient solid-state memory. In some embodiments, the memory 702 optionally includes memories disposed remote from the processor 701, and these remote memories may be connected, through a network, to the electronic device for performing the trusted environment remote verification method. Examples of the preceding network include, but are not limited to, the Internet, an intranet, a local area network, a mobile communication network and a combination thereof.

The electronic device for performing the trusted environment remote verification method may further include an input device 703 and an output device 704. The processor 701, the memory 702, the input device 703, and the output device 704 may be connected by a bus or in other manners. FIG. 7 uses connection by a bus as an example.

The input device 703 may receive input number or character information and generate key signal input related to user settings and function control of the electronic device for performing the trusted environment remote verification method. The input device 703 may be, for example, a touchscreen, a keypad, a mouse, a trackpad, a touchpad, a pointing stick, one or more mouse buttons, a trackball or a joystick. The output device 704 may include, for example, a display device, an auxiliary lighting device (for example, a light-emitting diode (LED)) or a haptic feedback device (for example, a vibration motor). The display device may include, but is not limited to, a liquid-crystal display (LCD), an LED display, and a plasma display. In some implementations, the display device may be a touchscreen.

Various implementations of the systems and techniques described herein may be implemented in digital electronic circuitry, integrated circuitry, an application-specific integrated circuit (ASIC), computer hardware, firmware, software and/or a combination thereof. The various implementations may include implementations in one or more computer programs. The one or more computer programs may be executable and/or interpretable on a programmable system including at least one programmable processor. The programmable processor may be a dedicated or general-purpose programmable processor for receiving data and instructions from a memory system, at least one input device and at least one output device and transmitting data and instructions to the memory system, the at least one input device and the at least one output device.

These computing programs (also referred to as programs, software, software applications or codes) include machine instructions of a programmable processor. These computing programs may be implemented in a high-level procedural and/or object-oriented programming language and/or in an assembly/machine language. As used herein, the term "machine-readable medium" or "computer-readable medium" refers to any computer program product, device and/or apparatus (for example, a magnetic disk, an optical disk, a memory or a programmable logic device (PLD)) for providing machine instructions and/or data for a programmable processor, including a machine-readable medium for receiving machine instructions as machine-readable signals. The term "machine-readable signal" refers to any signal used in providing machine instructions and/or data for a programmable processor.

In order to provide interaction with a user, the systems and techniques described herein may be implemented on a computer. The computer has a display device (for example, a cathoderay tube (CRT) or an LCD monitor) for displaying information to the user and a keyboard and a pointing device (for example, a mouse or a trackball) through which the user may provide input for the computer. Other types of devices may also be used for providing interaction with a user. For example, feedback provided for the user may be sensory feedback in any form (for example, visual feedback, auditory feedback or haptic feedback). Moreover, input from the user may be received in any form (including acoustic input, voice input or haptic input).

The systems and techniques described herein may be implemented in a computing system (for example, a data server) including a back-end component, a computing system (for example, an application server) including a middleware component, a computing system (for example, a user computer having a graphical user interface or a web browser through which a user may interact with implementations of the systems and techniques described herein) including a front-end component or a computing system including any combination of such back-end, middleware or front-end components. Components of a system may be interconnected by any form or medium of digital data communication (for example, a communication network). Examples of the communication network include a local area network (LAN), a wide area network (WAN), the Internet, and a blockchain network.

According to the technical schemes in the embodiments of the present application, the local verification result of the target enclave is signed through the first key of the verification program of the verifier, and the verification demander performs signature verification on the signed local verification result according to the second key and determines the remote verification result of the target enclave according to the signature verification result, so that in the remote verification process of the trusted computing platform, the remote verification of the trusted environment across participants in the trusted computing platform can be independently achieved without relying on specific remote verification services, and the universality is better.

On the basis of the preceding technical schemes, the present application further provides an optional embodiment of the trusted environment remote verification system. In the embodiment, the system includes a verifier and a verification demander.

The verification demander initiates a remote verification request to the verifier based on a target enclave of the verifier.

The verifier performs location verification on the target enclave through a verification program and signs a local verification result through a first key of the verification program.

The verification demander performs signature verification on the signed local verification result according to a second key associated with the first key and determines a remote verification result of the target enclave according to a signature verification result.

In order to reduce the risk caused by improper management of the second key by the verification demander and reduce the complexity of the verification demander, the present application further provides another optional embodiment of the trusted environment remote verification system. In the embodiment, the system further includes a public supervisor of the verifier and the verification demander. Part of verification operations in the verification demander may be migrated to the public supervisor.

For example, the verification demander initiates a remote verification request to the verifier based on a target enclave of the verifier.

The verifier performs location verification on the target enclave through a verification program and signs a local verification result through a first key of the verification program.

The verification demander sends the signed local verification result to the public supervisor.

The public supervisor performs signature verification on the signed local verification result according to a second key associated with the first key and determines a remote verification result of the target enclave according to a signature verification result.

The public supervisor signs the remote verification result through its own private key and feeds back to the verification demander.

The verification demander performs signature verification on the signed remote verification result to obtain the final remote verification result.

The cloud computing refers to a technical system that accesses flexible and scalable shared physical or virtual resource pools through a network, in which resources can include servers, operating systems, networks, software, applications, and storage devices, and deploys and associates resources on demand and in a self-service manner. Cloud computing technology can provide efficient and powerful data processing capabilities for artificial intelligence, blockchain, and other technology applications and model training.

The computing system can include clients and servers. A client and a server are generally remote from each other and typically interact through a communication network. The relationship between the client and the server arises by virtue of computer programs running on respective computers and having a client-server relationship to each other. The server may be a cloud server, also referred to as a cloud computing server or a cloud host. As a host product in a cloud computing service system, the server solves the defects of difficult management and weak service scalability in a traditional physical host and a virtual private server (VPS) service.

It is to be understood that various forms of the preceding flows may be used, with steps reordered, added or removed. For example, the steps described in the present application may be executed in parallel, in sequence or in a different order as long as the desired results of the technical schemes disclosed in the present disclosure are achieved. The execution sequence of these steps is not limited herein.

The scope of the present application is not limited to the preceding specific implementations. It is to be understood by those skilled in the art that various modifications, combinations, sub-combinations and substitutions may be made depending on design requirements and other factors. Any modification, equivalent substitution, improvement and the like made within the spirit and principle of the present application is within the scope of the present application.

## Claims

1. A trusted environment remote verification method, performed by a verifier, comprising:
in response to a remote verification request of a verification demander, performing (S101) local verification on a target enclave through a verification program of the verifier; and
signing (SI02) a local verification result through a first key of the verification program, and feeding back the signed local verification result to the verification demander to enable the verification demander to perform the following operations: performing signature verification on the signed local verification result according to a second key associated with the first key, and determining a remote verification result of the target enclave according to a signature verification result.

2. The method according to claim 1, wherein the first key is hard coded into the verification program.

3. The method according to claim 2, wherein the verification program is one of program copies of a base program, and first keys in different program copies are different.

4. The method according to claim 2, wherein the first key and the second key are generated by a public supervisor of the verification demander and the verifier when the public supervisor compiles the verification program.

5. The method according to any one of claims 1 to 4, wherein code obfuscation is performed on the verification program when the verification program is written and/or compiled.

6. A trusted environment remote verification method, performed by a verification demander, comprising:
Initiating (S201), based on a target enclave of a verifier, a remote verification request to the verifier to enable the verifier to perform the following operations: performing local verification on the target enclave through a verification program of the verifier, and signing a local verification result through a first key of the verification program; and
performing (S202) signature verification on the signed local verification result according to a second key associated with the first key, and determining a remote verification result of the target enclave according to a signature verification result.

7. The method according to claim 6, wherein the first key is hard coded into the verification program.

8. The method according to claim 7, wherein the verification program is one of program copies of a base program, and first keys in different program copies are different.

9. The method according to claim 7, wherein the first key and the second key are generated by a public supervisor of the verification demander and the verifier when the public supervisor compiles the verification program.

10. The method according to any one of claims 6 to 9, wherein performing the signature verification on the signed local verification result according to the second key associated with the first key, and determining the remote verification result of the target enclave according to the signature verification result comprises:
sending the signed local verification result to a public supervisor of the verification demander and the verifier to enable the public supervisor to perform the following operations: performing the signature verification on the signed local verification result according to the second key associated with the first key, and determining the remote verification result of the target enclave according to the signature verification result; and
determining the remote verification result fed back by the public supervisor;
wherein in response to determining that the remote verification result of the target enclave comprises signature information of the public supervisor, determining the remote verification result fed back by the public supervisor comprises:
performing the signature verification on the remote verification result based on a locally hard-coded key of the public supervisor.

11. A trusted environment remote verification apparatus, configured in a verifier, comprising:
a local verification module (501), which is configured to, in response to a remote verification request of a verification demander, perform local verification on a target enclave through a verification program of the verifier; and
a feedback module (S502), which is configured to sign a local verification result through a first key of the verification program, and feed back the signed local verification result to the verification demander to enable the verification demander to perform the following operations: performing signature verification on the signed local verification result according to a second key associated with the first key, and determining a remote verification result of the target enclave according to a signature verification result.

12. A trusted environment remote verification apparatus, configured in a verification demander, comprising:
a remote verification request sending module (601), which is configured to initiate, based on a target enclave of a verifier, a remote verification request to the verifier to enable the verifier to perform the following operations: performing local verification on the target enclave through a verification program of the verifier, and signing a local verification result through a first key of the verification program; and
a remote verification result determination module (602), which is configured to perform signature verification on the signed local verification result according to a second key associated with the first key, and determine a remote verification result of the target enclave according to a signature verification result.

13. An electronic device, comprising:
at least one processor; and
a memory communicatively connected to the at least one processor; wherein
the memory has instructions executable by the at least one processor stored thereon, wherein the instructions are executed by the at least one processor to enable the at least one processor to perform the trusted environment remote verification method according to any one of claims 1 to 10.

14. A trusted environment remote verification system, comprising a verifier and a verification demander, wherein
the verification demander initiates a remote verification request to the verifier based on a target enclave of the verifier;
the verifier performs location verification on the target enclave through a verification program and signs a local verification result through a first key of the verification program; and
the verification demander performs signature verification on the signed local verification result according to a second key associated with the first key and determines a remote verification result of the target enclave according to a signature verification result.

15. A non-transitory computer-readable storage medium having computer instructions stored thereon, wherein the computer instructions are configured to cause a computer to perform the trusted environment remote verification method according to any one of claims 1 to 10.
